Europäisches Patentamt

(19) European Patent Office

Office européen des brevets

(11) Numéro de publication : **0 312 479 B1**

(12)

# FASCICULE DE BREVET EUROPEEN

(45) Date de publication du fascicule du brevet :
27.11.91 Bulletin 91/48

(51) Int. Cl.⁵ : **B42D 15/10, B42D 209/00, B42D 213/00**

(21) Numéro de dépôt : **88460024.8**

(22) Date de dépôt : **14.10.88**

(54) **Carte bancaire protégée contre la fraude.**

(30) Priorité : **16.10.87 FR 8714500**

(43) Date de publication de la demande :
**19.04.89 Bulletin 89/16**

(45) Mention de la délivrance du brevet :
**27.11.91 Bulletin 91/48**

(84) Etats contractants désignés :
**DE ES GB IT**

(56) Documents cités :
**EP-A- 0 040 839**
**AT-A- 334 117**
**DE-C- 3 248 784**
**US-A- 3 412 493**

(73) Titulaire : **CP8 OBERTHUR**
**102, Boulevard Malesherbes**
**F-75017 Paris (FR)**

(72) Inventeur : **Peronneau, Georges Maurice**
**130 Résidence Elysée II**
**F-78170 La Selle Saint-Cloud (FR)**

(74) Mandataire : **Martin, Jean-Jacques et al**
**Cabinet REGIMBEAU 11, rue Franz Heller**
**F-35700 Rennes (FR)**

# Description

La présente invention concerne une carte bancaire protégée contre la fraude, et plus particulièrement contre le désestampage et le réestampage des chiffres de la ligne optique estampée en relief sur la carte.

La quasi-totalité des cartes bancaires actuellement en service sont des cartes en matière plastique qui comportent, en une zone bien définie de leur face recto, une série de chiffres en relief, réalisés par estampage à chaud de la carte. Ces chiffres qui sont répartis généralement en quatre groupes de quatre chiffres alignés et séparés par des blancs, en un emplacement et avec des dimensions standardisées, sont destinés à être reconnus par des systèmes de lecture optique. C'est pourquoi le nombre qu'ils forment est usuellement appelé "ligne optique". Ce nombre peut correspondre, par exemple, au numéro de compte bancaire du porteur de la carte. Après estampage, la partie en relief des chiffres, qui fait saillie sur la face recto, est généralement colorée en surface au moyen d'un ruban transfert à chaud, par exemple en blanc. Cette coloration des chiffres, qui tranche avec la couleur de la carte, permet d'améliorer la lisibilité du numéro de compte et, en principe, de rendre plus difficile la fraude par désestampage de ce numéro et réestampage d'un nouveau numéro.

Malheureusement, l'expérience a montré que cette protection était insuffisante. Il est relativement aisé d'enlever la coloration sur les chiffres à l'aide d'alcool ou par frottement doux, de désestamper localement les chiffres que l'on veut modifier, soit à chaud soit à froid par pression, de réestamper de nouveaux chiffres, et de colorer ces derniers. Cette modification est difficilement repérable. L'effacement de la coloration ne laisse pratiquement pas de traces sur le support et le changement de chiffres est très peu visible.

Bien entendu, la fraude est encore plus aisée lorsqu'aucune coloration n'a été prévue sur les chiffres après l'estampage (ce que est le cas pour certains modèles de carte).

Le document DE-C-3248784 a pour objet une carte d'identité comportant des signes alphanumériques estampés en relief. Il est prévu sur la carte un enregistrement de données dont le contenu est identique à celui desdits signes, et qui est réalisé dans la matière de la carte par un rayon laser. Les inscriptions faites au laser engendrent sur la surface de la carte des microreliefs — visibles à l'oeil nu — qu'il n'est pas possible d'éliminer. En cas de désestampage/réestampage frauduleux des signes en relief, il y a par conséquent discordance entre les nouveaux signes et l'impression originale au laser, ce qui permet de détecter facilement la fraude.

Dans un mode de réalisation particulier, l'inscription laser est faite en négatif, sur une zone contenant les signes estampés.

Cette technique connue est relativement coûteuse, difficile à mettre en oeuvre, et donc mal adaptée à une production en grande série. Elle impose en effet une double personnalisation de la carte, d'une part par estampage, d'autre part au rayon laser. Or, l'impression de signes dans la matière d'une carte au moyen d'un laser, notamment en négatif, nécessite l'utilisation d'un matériel sophistiqué et cher, ceci d'autant que l'impression doit être personnalisée, c'est-à-dire différente d'une carte à l'autre. En outre, il est nécessaire — pour la bonne mise en oeuvre d'une telle technique — de prévoir un poste additionnel de comparaison des deux impressions formées sur chaque carte, et de contrôle de la bonne concordance de celles-ci. Il s'agit donc là d'une technique extrêmement contraignante.

Parmi les cartes bancaires actuellement commercialisées, certains modèles sont munis d'un hologramme. Il s'agit d'un film métallisé sous vide ayant une empreinte holographique en surface (image donnant l'impression du relief). Ce film, qui possède une forme carrée ou rectangulaire, est déposé sur la face recto de la carte ; son intérêt est de réduire les risques de fraude sur les supports, c'est-à-dire les cartes vierges (avant estampage des différentes informations), en raison des difficultés que posent tant la reproduction que l'obtention — c'est-à-dire la fourniture — de tels hologrammes.

L'hologramme est généralement positionné sur la surface de la carte de telle façon qu'il recouvre les deux, trois ou quatre derniers chiffres de la ligne optique précédemment définie. Comme sur les cartes plus traditionnelles, l'ensemble des chiffres en relief est en outre coloré en surface.

La demanderesse a constaté, en procédant à des essais, que la présence de cet hologramme rendait difficilement falsifiables les chiffres qu'il recouvre. En effet, si le fraudeur enlève la coloration sur ces chiffres, les parties de l'hologramme situées à leur surface ont tendance à disparaître également. Ce phénomène inattendu résulte probablement des caractéristiques mécano-chimiques de la liaison qui est réalisée entre l'hologramme et la couche de coloration au cours de leur liaison à chaud. L'intimité de la liaison est telle qu'on ne peut dissocier la couche de coloration de l'hologramme ni par attaque chimique (par de l'alcool ou par un autre colorant), ni par frottement mécanique.

Toutefois, la présence de l'hologramme prévu sur les cartes connues ne suffit pas à empêcher la fraude par modification du numéro de compte, du fait qu'une petite partie seulement de la ligne optique est recouverte par l'hologramme. Il suffit en effet de modifier les autres chiffres — en totalité ou en partie — par désestampage et réestampage pour obtenir la falsification recherchée.

On notera que sur les cartes connues à hologramme, l'un des chiffres du dernier groupe, recouvert par l'hologramme, est le chiffre "clé" du numéro de compte. Il s'agit d'un chiffre qui se déduit, conformément à une loi donnée, de l'ensemble des autres, ce qui permet un certain contrôle de l'authenticité du numéro. Malheureusement, la loi en question est une fonction mathématique généralement connue du fraudeur, si bien que ce dernier peut reconstituer un nombre respectant cette loi en modifiant uniquement des chiffres situés à l'extérieur de l'hologramme.

La présente invention a pour principal objectif de résoudre ce problème en proposant une carte bancaire du type évoqué plus haut qui ne puisse pratiquement pas être falsifiée par désestampage et réestampage des chiffres composant sa ligne optique, en raison des traces produites par ces opérations qui détériorent l'aspect de la carte.

Un autre objectif de l'invention est de proposer une carte bancaire qui se prête à une technique de fabrication facile à mettre en oeuvre, adaptée à une production de grande série et permettant d'obtenir des prix de revient relativement faibles.

Ce résultat est atteint, conformément à l'invention grâce au fait que l'hologramme prévu sur la face recto de la carte a la forme d'un bandeau qui recouvre la totalité des caractères en relief (tels que des chiffres) composant la ligne optique. Avantageusement, les parties en relief de l'hologramme sont recouvertes d'une couche de produit colorant.

Grâce à cet arrangement, tout désestampage par pression de l'un quelconque des chiffres provoque la détérioration de la zone d'hologramme se trouvant en cet endroit. Cette détérioration est encore aggravée dans le cas où le désestampage est précédé par une opération d'enlèvement du produit colorant, ainsi que cela a été expliqué plus haut.

Le prix de revient d'un hologramme non personnalisé, ainsi que le coût de sa pose, sont relativement bas, et ne grèvent que modestement le prix de revient global de la carte bancaire.

L'invention sera mieux comprise grâce à la description qui va suivre, et qui se réfère au dessins annexés.

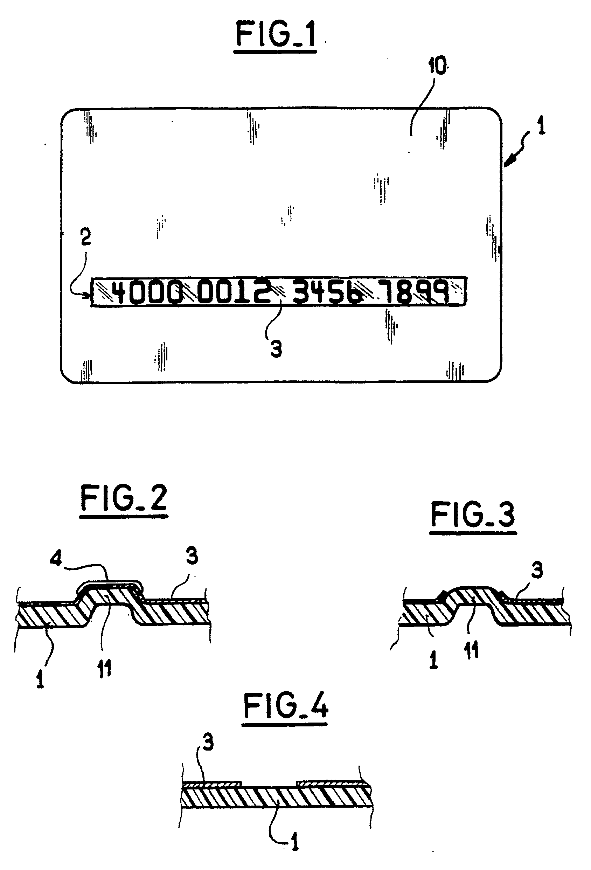

Sur ces dessins, la figure 1 est une vue de face d'une carte bancaire conforme à l'invention ; la figure 2 représente en coupe une partie estampée de la ligne optique de la carte de la figure 1 ; les figures 3 et 4 sont des vues analogues à la figure 2, consécutives à deux étapes d'une opération de falsification de cette partie, en l'occurence de décoloration et de désestampage.

La figure 1 représente la face recto 10 d'une carte bancaire 1 en matière plastique portant une ligne optique 2 composée de caractères normalisés en relief obtenus par estampage du support ; il s'agit en l'occurence de quatre groupes de chiffres formant le numéro "4000 0012 3456 7899" qui est par exemple le numéro de compte du titulaire de la carte.

Conformément à l'invention, la totalité de ce numéro est recouverte par un hologramme en forme de bandeau 3. Ce dernier est un film métallisé sous vide, sur lequel un hologramme à deux ou trois dimensions a été estampé ; il a été déposé sur la carte (avant estampage des caractères de la ligne optique) par transfert à chaud.

Les parties en relief 11 sont en outre recouvertes d'une couche de colorant approprié 4, par exemple également transférée à chaud.

Comme cela est illustré par la figure 3, si un fraudeur arrive à enlever le colorant 4, par voie chimique ou mécanique, il enlève aussi automatiquement la partie de l'hologramme 3 qui se trouve sous le colorant. Le support 1 est donc mis à nu à cet endroit et la couleur de celui-ci apparaît à travers les vides laissés dans l'hologramme. Ces défauts sont d'autant plus apparents qu'un hologramme présente une surface claire et brillante (genre miroir) tandis que le support est mat et, de préférence, de teinte foncée. Même après désestampage (figure 4), on a donc affaire à une carte à l'aspect détérioré, difficilement réparable en raison des difficultés d'approvisionnement en hologrammes. L'estampage de nouveaux chiffres ne peut se faire sans traces, ce qui permet de déceler la fraude.

Diverses formes de bandeau-hologramme peuvent naturellement être envisagées, pourvu que ce bandeau couvre l'ensemble des caractères de la ligne optique.

## Revendications

1. Carte bancaire protégée contre la fraude, et plus particulièrement contre le désestampage et le réestampage des caractères en relief composant sa ligne optique, caractérisée en ce qu'elle est pourvue d'un hologramme (3) en forme de bandeau qui recouvre la totalité de cette ligne optique (2) et en ce que les parties en relief (11) de cette dernière (et de l'hologramme) sont recouvertes d'une couche de colorant (4).

## Patentansprüche

1. Bankausweiskarte, geschützt gegen Fälschung und, genauer, gegen die Entprägung und Wiederprägung von vorspringenden Zeichen, die seine optische Linie bilden, dadurch gekennzeichnet, daß sie mit einem Hologramm (3) in Form eines Bandes versehen ist, die die Gesamtheit dieser optischen Linie (2) überdeckt, und daß die vorspringenden Bereiche (11) der optischen Linie (und des Hologramms) mit einer Farbschicht (4) bedeckt sind.

## Claims

1. Bank card protected against fraud and more particularly against the stamping flat and restamping of the characters in relief comprising its optical line, characterized in that it is provided with a hologram (3) in the form of a strip covering the whole of this optical line (2), and in that the parts in relief (11) of the optical line (and of the hologram) are covered by a layer of colouring agent (4).

## FIG.1

4000 0012 3456 7899

## FIG.2

## FIG.3

## FIG.4